# EUROPÄISCHE PATENTSCHRIFT

(11) **EP 2 105 075 B1**
(45) Veröffentlichungstag und Bekanntmachung des Hinweises auf die Patenterteilung: **21.09.2011**
(21) Anmeldenummer: 08153418.2
(22) Anmeldetag: 27.03.2008
(51) Int. Cl.: A47J 31/36

(54) **Brüheinrichtung für eine Kaffeemaschine**
Brewing device for a coffee machine
Dispositif-infuseur pour une machine à café

(43) Veröffentlichungstag der Anmeldung: 30.09.2009
(73) Patentinhaber: Schaerer AG, 4528 Zuchwil (CH)
(72) Erfinder: Lüssi, André, 3303, Jegenstorf (CH)
(74) Vertreter: Scheuzger, Beat Otto

(56) Entgegenhaltungen:
- EP-A- 0 528 758

## Beschreibung

Die vorliegende Erfindung bezieht sich auf eine Brüheinrichtung für eine Kaffeemaschine, umfassend einen Brühzylinder mit einer zylindrischen Bohrung und einen oberen Kolben und einen unteren Kolben, durch welche der Brühzylinder zur Bildung einer Brühkammer abschliessbar ist, wobei der Brühzylinder und die Kolben relativ zueinander verschiebbar in einem Rahmen gehalten sind und über eine Antriebseinrichtung antreibbar sind, welche Antriebseinrichtung eine Spindel, deren beidseitigen Enden im Rahmen drehbar gelagert sind, und einen Motor umfasst, einen am Brühzylinder angebrachten Mitnahmeteil, der mit einem Gewindeteil versehen ist und über die Spindel entlang im Rahmen angebrachten Linearführungen verschiebbar ist, eine Kaffeepulverzuführeinrichtung zum Befüllen der Brühkammer mit Kaffeepulver, welche mit einem schwenkbaren Trichter versehen ist, welcher von einer Füllposition entgegen einer Federkraft in eine weggeschwenkte Position bringbar ist und umgekehrt, und ein Abstreifelement zum Abstreifen des nach dem Brühvorgang aus der Brühkammer durch den unteren Kolben ausgestossenen Kaffeepulverkuchens in einen Auffangbehälter.

Derartige Brüheinrichtungen sind in vielfältiger Weise bekannt und werden sowohl in Haushaltskaffeemaschinen wie auch in Restaurationskaffeemaschinen eingesetzt. Zum Bezug eines Kaffees wird die erforderliche Menge von üblicherweise frisch gemahlenem Kaffeepulver, abhängig davon, welche Art von Kaffee bezogen wird, wie beispielsweise normaler Kaffee, Espressokaffee, Ristrettokaffee usw., in die Brühkammer eingefüllt. Die Brühkammer wird danach verschlossen, wonach heisses Wasser mit dem gewünschten Druck durch die Brühkammer geleitet wird, wobei Kaffee gebrüht wird. Der so frisch gebrühte Kaffee gelangt dann über einen Auslass in das bereit gestellte Gefäss. Die Brühkammer wird danach geöffnet, der darin befindliche Kaffeepulverrest wird aus der Brühkammer ausgeworfen und gelangt in einen Behälter.

Eine derartige Brüheinrichtung ist beispielsweise aus der EP A 0528 758 bekannt. Zum Einfüllen von Kaffeepulver in den Brühzylinder wird dieser in die Füllposition gebracht, das heisst er ist vom oberen Kolben beabstandet, der untere Kolben innerhalb des Brühzylinders befindet sich in der unteren Position. In dieser Lage schwenkt der schwenkbare Trichter, welcher im Bereich des oberen Kolbens am Rahmen schwenkbar gehalten ist, in den Freiraum zwischen oberem Kolben und Brühzylinder, das über den schwenkbaren Trichter zugeführte Kaffeepulver wird dadurch in die durch den Brühzylinder und den unteren Kolben gebildete Kammer geleitet. Zum Verschliessen der Brühkammer fährt der Brühzylinder zusammen mit dem unteren Kolben hoch, bis der obere Kolben die Brühkammer verschliesst. Während dieses Hochfahrens wird der schwenkbare Trichter vom Brühzylinder entgegen der Federkraft zurückgedrückt, wodurch der Platz zum Hochfahren des Brühzylinders frei gegeben wird.

Mit dieser Anordnung befindet sich dieser schwenkbare Trichter immer in einer Position, in welcher der obere Kolben und insbesondere das Sieb der Kolbenfläche, mit welcher die Brühkammer abgeschlossen wird, verdeckt ist und die Zugänglichkeit zum Reinigen dieser Kolbenfläche nicht optimal ist.

Die Aufgabe der vorliegenden Erfindung besteht somit darin, die Brüheinrichtung so auszugestalten, dass die Zugänglichkeit zum oberen Kolben und insbesondere der durch das Sieb gebildeten Kolbenfläche optimal möglich wird.

Erfindungsgemäss erfolgt die Lösung dieser Aufgabe dadurch, dass der schwenkbare Trichter von der weg geschwenkten Position in eine voll ausgeschwenkte Position weiter schwenkbar ist und in dieser voll ausgeschwenkten Position durch Verriegelungsmittel arretierbar und über Entriegelungsmittel entriegelbar ist.

Mit dieser Ausgestaltung kann zum Reinigen des oberen Kolbens und insbesondere das die Kolbenfläche bildende Sieb, mit welchem die Brühkammer während des Brühvorgangs für einen Kaffee abgeschlossen ist, in eine voll ausgeschwenkte Position ausgefahren werden, wodurch die Zugänglichkeit optimiert wird.

In vorteilhafter Weise sind die Verriegelungsmittel aus einem am schwenkbaren Trichter angebrachten Nocken gebildet, welcher in der voll ausgeschwenkten Position des schwenkbaren Trichters in eine am Rahmen angebrachte Ausnehmung einklinkt und den schwenkbaren Trichter in dieser voll ausgeschwenkten Position hält. Der Nocken und die Ausnehmung können bei der Teilefertigung jeweils am entsprechenden Teil angeformt werden, was eine besonders einfache Herstellung ermöglicht.

In vorteilhafter Weise sind die Entriegelungsmittel aus einem Hebel gebildet, welcher schwenkbar am Rahmen gehalten ist und an dessen verschwenkbarem Endbereich ein Vorsprung angebracht ist, welcher in die Ausnehmung hinein ragt und beim entsprechenden Verschwenken den Nocken aus der Ausnehmung drückt und den Trichter entriegelt. Neben dem einfachen Aufbau dieser Entriegelungsmittel kann der ausgeschwenkte Trichter in optimaler Weise entriegelt werden.

In vorteilhafter Weise ist am Hebel ein Bedienerelement angebracht, welches die Entriegelung von Hand des ausgeschwenkten Trichters in einfacher Weise ermöglicht.

Eine weitere vorteilhafte Ausgestaltung der Erfindung besteht darin, dass am Hebel ein Steuernocken angebracht ist, welcher mit einer Steuerkurve zusammen wirkt, welche am verfahrbaren Bereich des Brühzylinders angebracht ist, und mit welcher beim Hochfahren des Brühzylinders über den Steuernocken der Hebel verschwenkbar ist und den voll ausgeschwenkten Trichter entriegelt. Dadurch wird eine automatische Entriegelung des ausgeschwenkten Trichters erreicht, bevor ein Brühvorgang ausgeführt wird.

In vorteilhafter Weise ist die Steuerkurve als Steg ausgebildet, welcher mit einer bezüglich der Verfahrrichtung des Brühzylinders geneigten Fläche ausgestattet ist und welcher am Abstreifelement angebracht ist. Dieser Steg kann in einfacher Weise bei der Herstellung des Abstreifelementes an diesem angeformt werden, eine sichere Funktion ist gewährleistet.

In vorteilhafter Weise ist der Nocken an einem elastisch verformbaren Teil einer Wandung des verschwenkbaren Trichters angeformt, wodurch keine zusätzlichen Federmittel erforderlich sind, um den Nocken bei der Verriegelung in die Ausnehmung zu drücken.

Eine Ausführungsform der Erfindung wird nachfolgend anhand der beiliegenden Zeichnung beispielhaft näher erläutert.

Es zeigt
Fig. 1 eine Schnittdarstellung einer Brüheinrichtung einer Kaffeemaschine beim Einfüllvorgang des Kaffeepulvers in die Brühkammer;
Fig. 2 eine Schnittdarstellung der Brüheinrichtung mit geschlossener Brühkammer während des Brühvorgangs für einen Kaffee;
Fig. 3 eine Schnittdarstellung der Brüheinrichtung mit geöffneter Brühkammer und durch den unteren Kolben ausgestossenem Kaffeepulverkuchen;
Fig. 4 eine Schnittdarstellung der Brüheinrichtung mit beginnender Abstreifung des Kaffeepulverkuchens durch die Abstreifeinrichtung;
Fig. 5 eine Seitenansicht auf die Brüheinrichtung mit vollständig ausgeschwenktem schwenkbaren Trichter;
Fig. 6 eine Schnittdarstellung der Brüheinrichtung entlang Linie VI-VI gemäss Fig. 5;
Fig. 7 eine Seitenansicht auf die Brüheinrichtung mit vollständig ausgeschwenktem schwenkbaren Trichter und hoch gefahrenem Brühzylinder;
Fig. 8 eine Schnittdarstellung des oberen Bereichs der Brüheinrichtung entlang Linie VIII-VIII gemäss Fig. 7,
Fig. 9 eine Teilschnittdarstellung der Brüheinrichtung entlang Linie IX-IX gemäss Fig. 8; und
Fig. 10 in räumlicher Darstellung eine Ansicht des schwenkbaren Trichters.

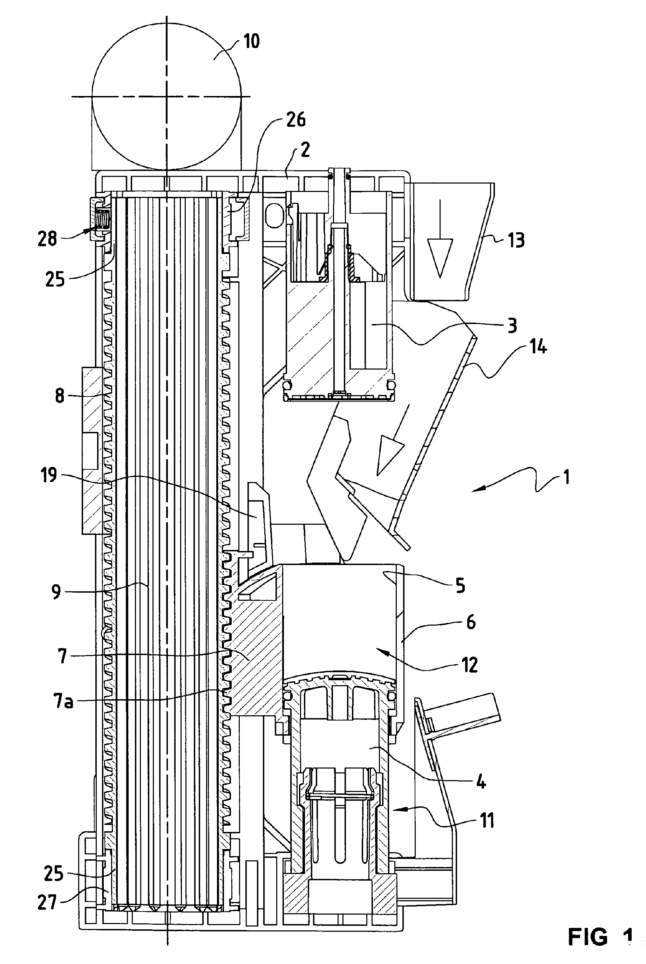

Wie aus den Figuren 1 bis 4 ersichtlich ist, umfasst die Brüheinrichtung 1 einen im Rahmen 2 ortsfest gehaltenen oberen Kolben 3. Dem oberen Kolben 3 axial gegenüber liegend ist ein unterer Kolben 4 angeordnet, der bezüglich des oberen Kolbens 3 axial verschiebbar ist. Dieser untere Kolben 4 ist in einer zylindrischen Bohrung 5 eines Brühzylinders 6 gehalten, welcher Brühzylinder 6 ebenfalls axial verschiebbar ist. Der Brühzylinder 6 ist mit einem Mitnahmeteil 7 ausgestattet, an welchem ein Gewindeteil 7a angebracht ist, welcher Gewindeteil 7a mit einem Gewinde 8 einer drehbar im Rahmen 2 gehaltenen Spindel 9 im Eingriff ist. Diese Spindel 9 weist an den beidseitigen Enden jeweils einen Lagerzapfen 25 auf, die in im Rahmen 2 angebrachten Lagerringen 26 und 27 gleitend drehbar gehalten sind. Im Lagerring 26 ist ein Lagerelement 28 eingesetzt, mit welchem das Spiel zwischen Lagerzapfen 25 und Lagerring 26 aufgehoben wird. Die Spindel 9 ist in bekannter Weise über einen Elektromotor 10 antreibbar, der ebenfalls am Rahmen angebracht ist.

In Fig. 1 ist die Brüheinrichtung 1 in der Füllposition dargestellt. Dies bedeutet, dass sich der untere Kolben 4 in der untersten Position befindet, in welcher er durch die am Rahmen 2 angebrachte Klinkeinrichtung 11 gehalten wird. Diese Position hat der untere Kolben 4 dadurch erreicht, indem der Brühzylinder 6 über die Spindel 9 durch entsprechende Rotation ebenfalls in die unterste Position gebracht worden ist, in welche der untere Kolben 4 mitgenommen worden ist, bis er in die Klinkeinrichtung 11 eingeklinkt ist, danach ist der Brühzylinder 6 durch entsprechendes Verdrehen der Spindel 9 wieder hoch gefahren worden, wie dies in Fig. 1 ersichtlich ist. Der untere Kolben 4 verblieb hierbei in der untersten Position, der Brühzylinder 6 hat sich somit bezüglich des unteren Kolbens 4 angehoben, wodurch innerhalb des Brühzylinders 6 die nach unten durch den unteren Kolben 4 abgeschlossene Brühkammer 12 gebildet wird. In dieser Füllposition befindet sich das Abstreifelement in seiner Ruheposition über dem Mitnahmeteil 7.

In die Brühkammer 12 wird nun das frisch gemahlene Kaffeepulver zugeführt. Dieses Kaffeepulver wird in bekannter Weise in einer Kaffeemühle, die nicht dargestellt ist und die ebenfalls in der entsprechenden Kaffeemaschine untergebracht ist, gemahlen, das Pulver gelangt über einen ersten Trichter 13 auf einen schwenkbaren Trichter 14, durch welchen das gemahlene Kaffeepulver in die Brühkammer 12 geleitet wird. Hierzu befindet sich der schwenkbare Trichter 14, welcher schwenkbar am Rahmen 2 gelagert ist, wie später noch im Detail beschrieben wird, in der eingeschwenkten Füllposition, das zugeführte Kaffeepulver gelangt somit in die Brühkammer 12. Die zugeführte Kaffeepulvermenge wird in bekannter Weise dosiert, je nachdem welche Art von Kaffee bezogen werden soll.

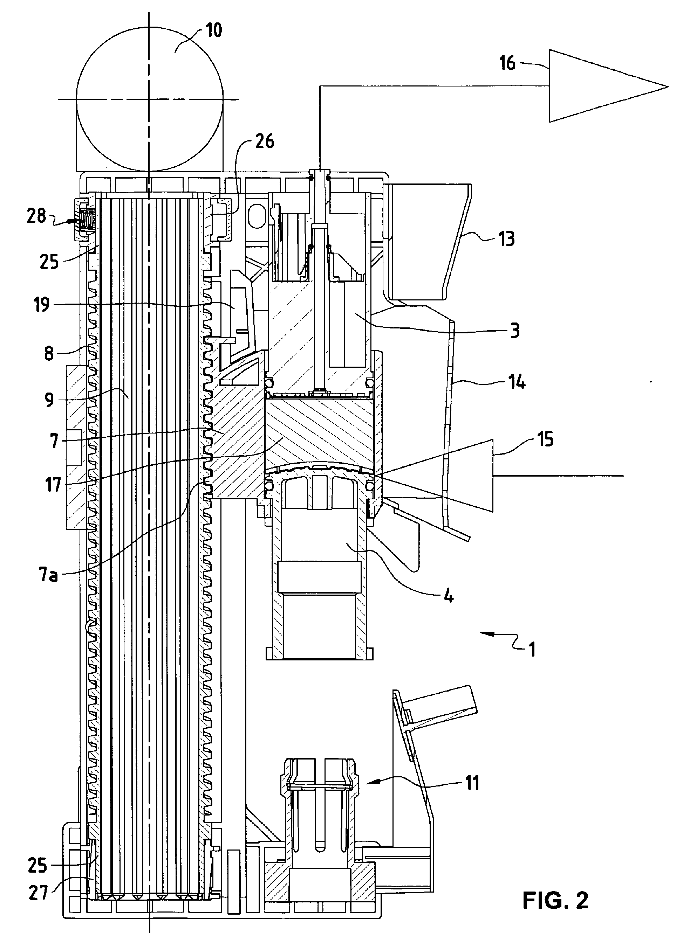

Nach dem Befüllen der Brühkammer 12 mit frisch gemahlenem Kaffeepulver wird die Spindel 9 über den Elektromotor 10 in Rotation versetzt, über den Gewindeteil 7a am Mitnahmeteil 7 wird der Brühzylinder 6 hoch gefahren, wobei der untere Kolben 4 über entsprechende Mitnehmer mitgenommen wird. Der Brühzylinder 6 und der untere Kolben 4 werden solange hoch gefahren, bis die Brühkammer 12 durch den oberen Kolben 3 verschlossen wird und das sich in der Brühkammer 12 befindende Kaffeepulver gepresst wird. In dieser Position des Brühzylinders 6, die in Fig. 2 dargestellt ist, ist die Brühstellung erreicht. In bekannter Weise kann nun von unten her in die Brühkammer 12 das heisse Wasser zugeführt werden, wie dies durch Pfeil 15 dargestellt ist, das heisse Wasser durchströmt die Brühkammer 12 und das sich darin befindende gemahlene Kaffeepulver und wird über einen Abflusskanal, der in bekannter Weise im oberen Kolben 3 angebracht ist, als gebrühter Kaffee abgeleitet, wie dies durch Pfeil 16 dargestellt ist, und gelangt in bekannter Weise über eine nicht dargestellte Leitung in einen Ausguss der Kaffeemaschine und von dort in das darunter bereit gestellte Gefäss. Zum Brühen des Kaffees wird das in der Brühkammer sich befindende Kaffeepulver zwischen den beiden Kolben 3 und 4 derart komprimiert, dass dieses dem durchströmenden Brühwasser einen Widerstand entgegen setzt, sodass das Brühwasser mit einem Druck von etwa 8 bar durch die Brühkammer gepresst werden muss. Das ausgebrühte Kaffeepulver verbleibt in der Brühkammer 12 und bildet einen Kaffeepulverkuchen, der sehr kompakt und feucht ist.

Wie aus Fig. 2 ersichtlich ist, wird der schwenkbare Trichter 14 beim Hochfahren des Brühzylinders 6 mit dem unteren Kolben 4 aus der Füllposition in eine weg geschwenkte Position zurückgeschwenkt, was entgegen einer auf den schwenkbaren Trichter 14 wirkenden Federkraft erfolgt, welche den schwenkbaren Trichter 14 in die in Fig. 1 dargestellte Position zurückdrücken möchte. Durch das Wegschwenken des schwenkbaren Trichters 14 wird zwischen oberem Kolben 3 und Brühzylinder 6 der Raum frei gegeben, sodass der Brühzylinder 6 beim Hochfahren zum Verschliessen der Brühkammer 12 mit dem oberen Kolben 3 nicht mit dem schwenkbaren Trichter 14 kollidiert.

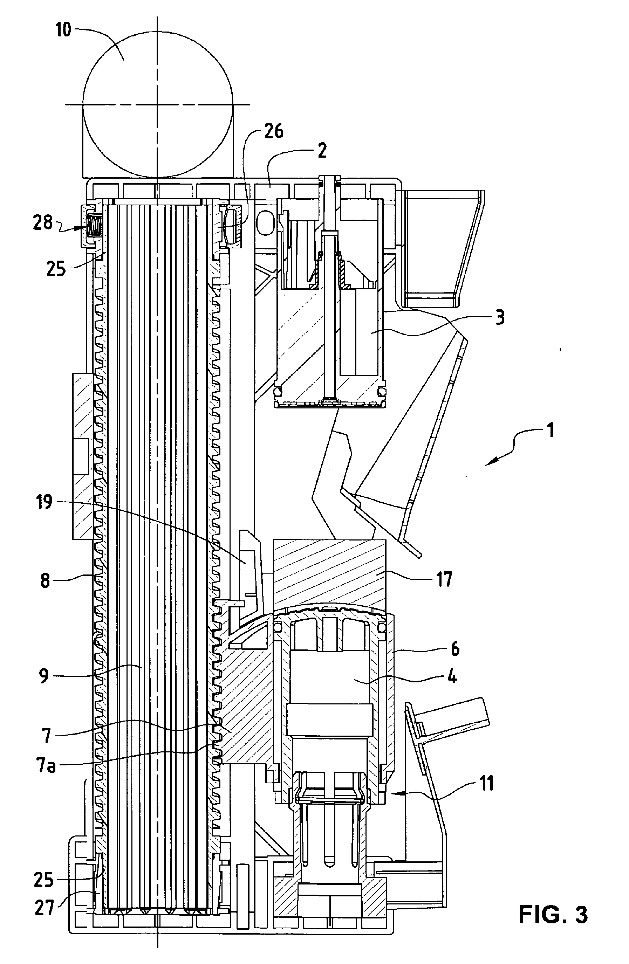

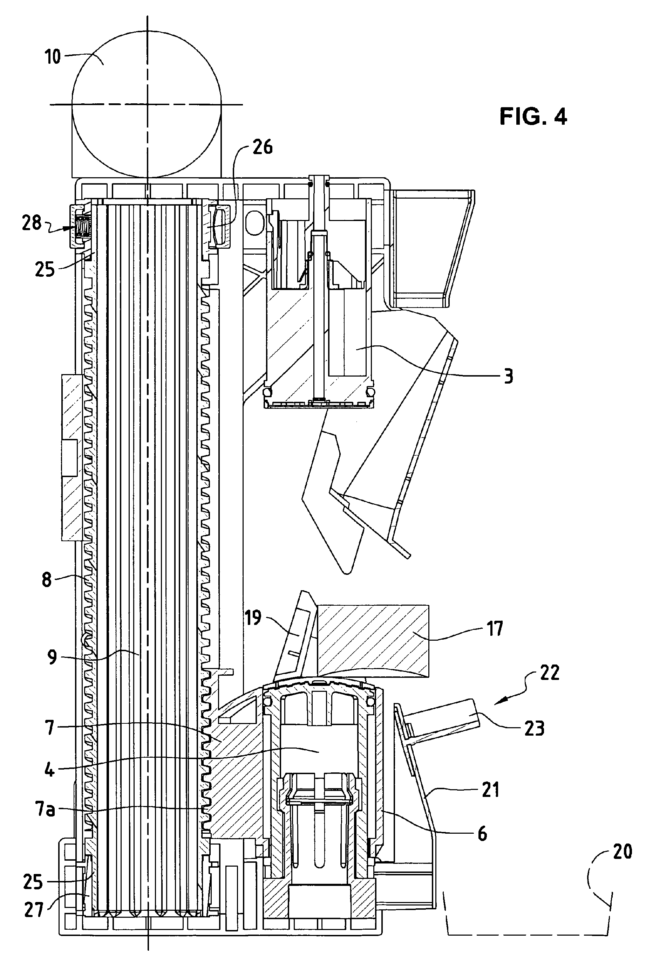

Nach der Durchführung des Brühvorgangs wird die Brühkammer 12 geöffnet, indem der Brühzylinder 6 und der untere Kolben 4 durch entsprechendes Verdrehen der Spindel 9 nach unten gefahren werden, wie dies in Fig. 3 dargestellt ist. Der untere Kolben 4 erreicht hierbei mit seinem unteren Ende die Klinkeinrichtung 11 und stützt sich darauf ab. Der Brühzylinder 6 wird weiter nach unten gefahren, der untere Kolben bleibt stehen, wodurch der Kaffeepulverkuchen 17 aus dem Brühzylinder 6 ausgestossen wird, wie dies in Fig. 3 ersichtlich ist. Wenn der Brühzylinder 6 mit seinem oberen Rand den oberen Rand des unteren Kolbens 4 erreicht hat, liegt der ausgestossene Kaffeepulverkuchen 17 auf dem unteren Kolben 4 auf, der untere Kolben 4 wird mit dem weiter nach unten verfahrbaren Brühzylinder 6 über entsprechende Anschläge mitgenommen und in die Klinkeinrichtung 11 eingefahren, wie dies in Fig. 4 dargestellt ist. Wenn der Brühzylinder 6 und der untere Kolben 4 in den Bereich der unteren Position gelangen, wird das Abstreifelement 19, welches in bekannter Weise am Brühzylinder 6 angelenkt ist, über eine am Rahmen 2 angebrachte, bekannte nicht dargestellte Kulisse mechanisch betätigt. Hierdurch bewegt sich das Abstreifelement 19 quer über den unteren Kolben 4, der Kaffeepulverkuchen 17 wird, wie aus Fig. 4 ersichtlich, vom unteren Kolben 4 und dem Brühzylinder 6 abgestreift.

Der auszuwerfende Kaffeepulverkuchen 17 gelangt hierbei über eine Rutsche 21, die am Rahmen 2 angebracht ist, in einen nur schematisch dargestellten, in der Kaffeemaschine untergebrachten Behälter 20. An der Rutsche 21 ist ein Teilelement 22 angebracht, das in diesem Ausführungsbeispiel als Klinge 23 ausgebildet ist, mittels welcher der über die Rutsche 21 in den Behälter 20 gelangende Kaffeepulverkuchen 17 in kleinere Stücke zerschnitten wird.

Nach dem Auswerfen des Kaffeepulverkuchens 17, kann der Brühzylinder 6 durch entsprechendes Rotieren der Spindel 9 wieder in die Füllstellung gebracht werden, wie dies in Fig. 1 dargestellt ist, die Brüheinrichtung ist bereit zum Brühen eines weiteren Kaffees.

Nach dem Brühen einer bestimmten Anzahl von Kaffees muss die Brüheinrichtung gereinigt werden. Hierzu kann die Brüheinrichtung in bekannter Weise aus der Kaffeemaschine herausgenommen werden, der Reinigungsvorgang lässt sich dadurch einfach durchführen. Wie vorgängig beschrieben worden ist, wird der schwenkbare Trichter 14 in der offenen Stellung der Brühkammer über Federkraft in die eingeschwenkte Füllposition gedrückt, wie dies insbesondere in Fig. 1 und Fig. 4 ersichtlich ist. Dadurch deckt dieser schwenkbare Trichter den zu reinigenden oberen Kolben 3 weitgehend ab.

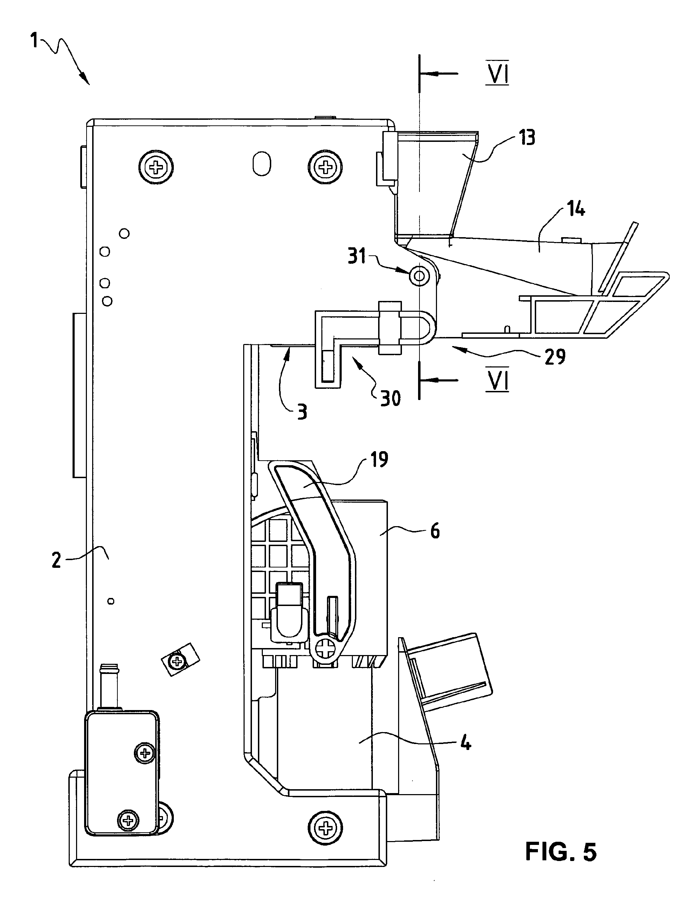

Wie in Fig. 5 dargestellt ist, lässt sich zum Reinigungsvorgang der Brüheinrichtung dieser schwenkbare Trichter 14 in eine voll ausgeschwenkte Position bringen, in welcher er über Verriegelungsmittel 29 gehalten wird. In dieser voll ausgeschwenkten Position des schwenkbaren Trichters 14 ist eine gute Zugänglichkeit zum oberen Kolben 3 gegeben, eine Reinigung insbesondere des den oberen Kolben 3 abschliessenden Siebes ist gewährleistet. Nach dem Reinigungsvorgang können die Verriegelungsmittel 29 über Entriegelungsmittel 30 entriegelt werden, der schwenkbare Trichter wird in die Füllposition zurückgeschwenkt, wie sie in Fig. 1 dargestellt ist. Der schwenkbare Trichter 14 ist hierzu über Bolzen 31 schwenkbar im Rahmen 2 gehalten.

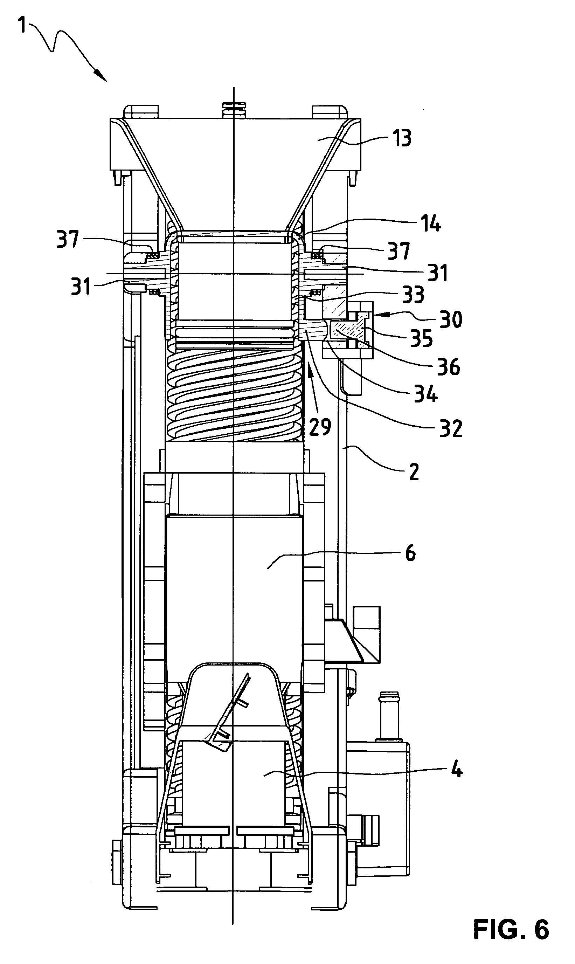

Aus der Schnittdarstellung gemäss Fig. 6 ist ersichtlich, wie der schwenkbare Trichter 14 über die Bolzen 31 schwenkbar im Rahmen 2 der Brüheinrichtung 1 gelagert ist. Die Verriegelungsmittel 29 umfassen einen Nocken 32, der an der Wandung 33 des schwenkbaren Trichters 14 angebracht ist. In der voll ausgeschwenkten Position des schwenkbaren Trichters 14, wie sie in Fig. 5 und entsprechend in Fig. 6 dargestellt ist, klinkt der Nocken 32 in eine Ausnehmung 34 ein, die am Rahmen 2 angebracht ist. Durch diesen in die Ausnehmung 34 eingefahrenen Nocken 32 wird der schwenkbare Trichter 14 in der voll ausgeschwenkten Position gehalten.

Mit den Entriegelungsmitteln 30 lässt sich die Verriegelung des schwenkbaren Trichters 14 entriegeln. Hierzu sind diese Entriegelungsmittel 30 aus einem Hebel 35 gebildet, der schwenkbar am Rahmen 2 gehalten ist, wie später noch beschrieben wird, an dessen verschwenkbarem Endbereich ein Vorsprung 36 angebracht ist, welcher in die Ausnehmung 34 hineinragt. Zum Entriegeln wird der Hebel 35 derart verschwenkt, dass der Vorsprung 36 weiter in die Ausnehmung 34 hineingedrückt wird, entsprechend wird der Nocken 32 durch elastisches Zurückweichen der Wandung 33 aus der Ausnehmung 34 hinaus gedrückt, durch die Federkraft von zwei Spiralfedern 37 wird der sich in der voll ausgeschwenkten Position befindende schwenkbare Trichter 14 gegen die Füllposition zurückgeschwenkt.

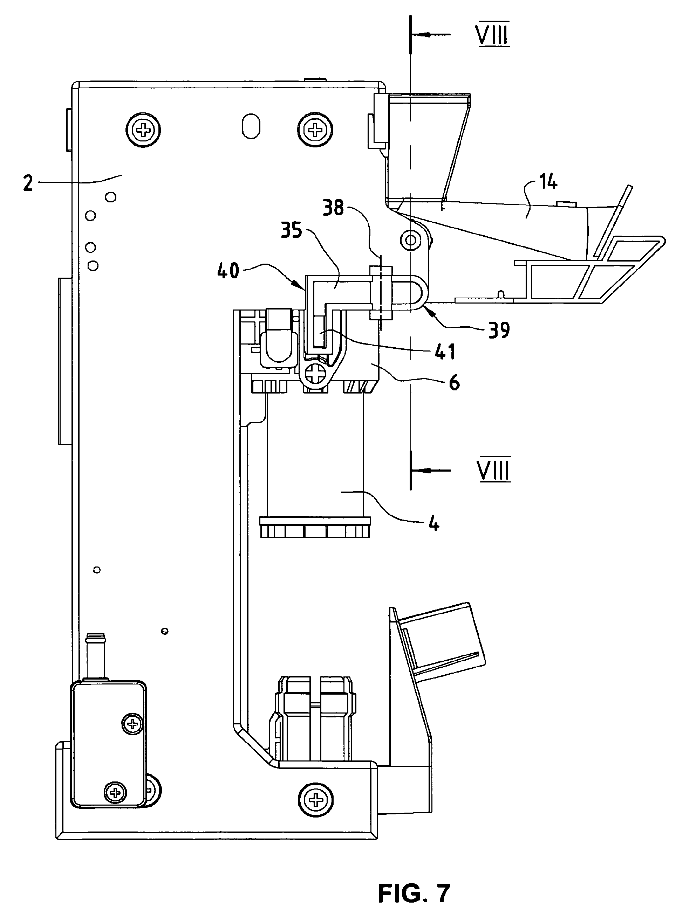

Wie aus Fig. 7 ersichtlich ist, ist der Hebel 35 um die Achse 38 schwenkbar am Rahmen 2 gehalten. An dessen einem verschwenkbaren Endbereich 39 ist der nicht sichtbare Vorsprung 36 (Fig. 6) angebracht. Der andere Endbereich 40 ist als Bedienerelement 41 ausgestattet. Der vorgängig beschriebene Entriegelungsvorgang kann durch ein handbetätigtes Verschwenken des Hebels 35 ausgeführt werden.

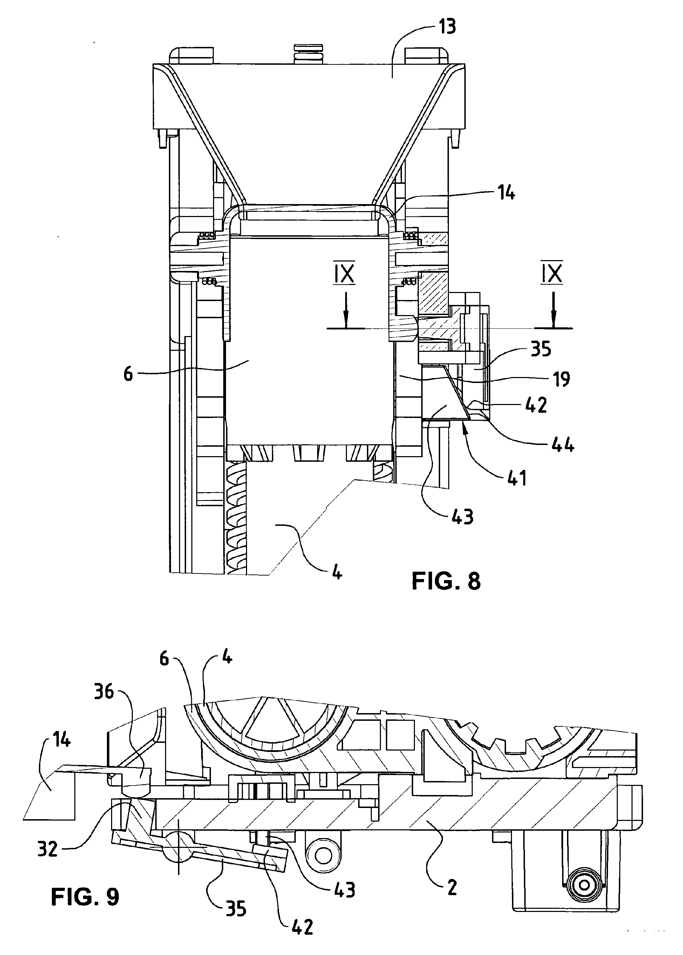

Wie insbesondere aus den Fig. 8 und 9 ersichtlich ist, werden die Entriegelungsmittel beim Hochfahren des Brühzylinders 6 zusammen mit dem unteren Kolben 4, welche Position aus Fig. 7 ersichtlich ist, betätigt. Hierzu ist am Brühzylinder 6 eine Steuerkurve 41 angebracht, die mit einem am Hebel 35 angebrachten Steuernocken 42 zusammenwirkt. Die Steuerkurve 41 besteht aus einem Steg 43, der im unteren Bereich des Abstreifelementes 19 angeformt ist, welches Abstreifelement 19 am Brühzylinder 6 angelenkt ist. Der Steg 43 ist mit einer geneigten Fläche 44 ausgestattet, welche beim Hochfahren des Brühzylinders 6 mit dem Abstreifelement 19 bewirkt, dass der Hebel 35 verschwenkt wird und der schwenkbare Trichter 14 entriegelt wird.

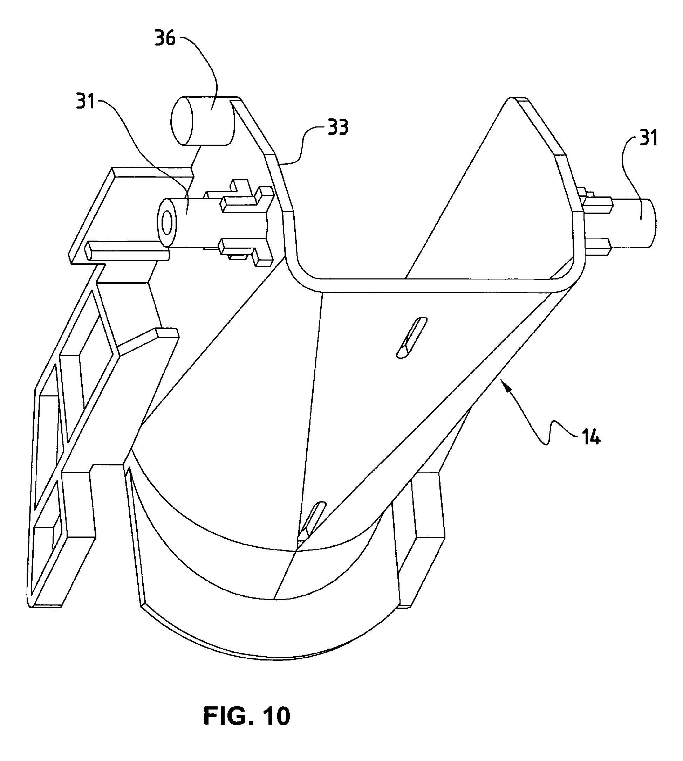

Fig. 10 zeigt in räumlicher Darstellung den schwenkbaren Trichter 14. An diesem sind die Bolzen 31 befestigt, mittels welchen der schwenkbare Trichter 14 schwenkbar im Rahmen 2 der Brüheinrichtung gelagert ist. Auf der einen Seite des schwenkbaren Trichters 14 ist an der Wandung 33 der Vorsprung 36 angeformt, beabstandet zum Bolzen 31. Der schwenkbare Trichter 14 ist aus einem elastischen Kunststoff hergestellt, durch die relativ geringe Dicke der Wandung 33 ergibt sich, dass der Vorsprung 36 zum Bolzen 31 federnd gehalten ist, indem in diesem Bereich die Wandung 33 als Blattfeder dient. Dadurch wird der Vorsprung 36 im nicht eingeriegelten Zustand elastisch vorgespannt, so dass er bei Erreichen der Ausnehmung 34 selbsttätig in diese Ausnehmung 34 gelangt.

Mit dieser Lösung kann in einfacher Weise erreicht werden, dass eine optimale Zugänglichkeit zum oberen Kolben der Brüheinrichtung zum Reinigen erreichbar ist.

## Patentansprüche

1. Brüheinrichtung für eine Kaffeemaschine, umfassend einen Brühzylinder (6) mit einer zylindrischen Bohrung und einen oberen Kolben (3) und einen unteren Kolben (4), durch welche der Brühzylinder (6) zur Bildung einer Brühkammer (12) abschliessbar ist, wobei der Brühzylinder (6) und die Kolben (3, 4) relativ zueinander verschiebbar in einem Rahmen (2) gehalten sind und über eine Antriebseinrichtung (9, 10) antreibbar sind, welche Antriebseinrichtung (9, 10) eine Spindel (9), deren beidseitigen Enden im Rahmen (2) drehbar gelagert sind, und einen Motor (10) umfasst, einen am Brühzylinder (6) angebrachten Mitnahmeteil (7), der mit einem Gewindeteil (7a) versehen ist und über die Spindel (9) entlang im Rahmen (2) angebrachten Linearführungen verschiebbar ist, eine Kaffepulverzuführeinrichtung zum Befüllen der Brühkammer (12) mit Kaffeepulver, welche mit einem schwenkbaren Trichter (14) versehen ist, welcher von einer Füllposition entgegen einer Federkraft in eine weggeschwenkte Position bringbar ist und umgekehrt, und ein Abstreifelement (19) zum Abstreifen des nach dem Brühvorgang aus der Brühkammer (12) durch den unteren Kolben (4) ausgestossenen Kaffeepulverkuchens (17) in einen Auffangbehälter (20), **dadurch gekennzeichnet, dass** der schwenkbare Trichter (14) von der weggeschwenkten Position in eine voll ausgeschwenkte Position weiterschwenkbar ist und in dieser voll ausgeschwenkten Position durch Verriegelungsmittel (29) arretierbar und über Entriegelungsmittel (30) entriegelbar ist.

2. Brüheinrichtung nach Anspruch 1, **dadurch gekennzeichnet, dass** die Verriegelungsmittel (29) aus einem am schwenkbaren Trichter (14) angebrachten Nocken (32) gebildet sind, welcher in der voll ausgeschwenkten Position des schwenkbaren Trichters (14) in eine am Rahmen (2) angebrachte Ausnehmung (34) einklinkt und den schwenkbaren Trichter (14) in dieser voll ausgeschwenkten Position hält.

3. Brüheinrichtung nach Anspruch 2, **dadurch gekennzeichnet, dass** die Entriegelungsmittel (30) aus einem Hebel (35) gebildet sind, welcher schwenkbar am Rahmen (2) gehalten ist und an dessen verschwenkbaren Endbereich (39) ein Vorsprung (36) angebracht ist, welcher in die Ausnehmung (34) hineinragt und beim entsprechenden Verschwenken den Nocken (32) aus der Ausnehmung (34) drückt und den schwenkbaren Trichter (14) entriegelt.

4. Brüheinrichtung nach Anspruch 3, **dadurch gekennzeichnet, dass** am Hebel (35) ein Bedienerelement angebracht ist.

5. Brüheinrichtung nach Anspruch 3 oder 4, **dadurch gekennzeichnet, dass** am Hebel (35) ein Steuernocken (42) angebracht ist, welcher mit einer Steuerkurve (41) zusammenwirkt, welche am verfahrbaren Bereich des Brühzylinders (6) angebracht ist, und mit welcher beim Hochfahren des Brühzylinders (6) über den Steuernocken (42) der Hebel (35) verschwenkbar ist und den voll ausgeschwenkten Trichter (14) entriegelt.

6. Brüheinrichtung nach Anspruch 5, **dadurch gekennzeichnet, dass** die Steuerkurve (41) als Steg (43) ausgebildet ist, welcher mit einer bezüglich der Verfahrrichtung des Brühzylinders (6) geneigten Fläche (44) ausgestattet ist und welcher am Abstreifelement (19) angebracht ist.

7. Brüheinrichtung nach einem der Ansprüche 2 bis 6, **dadurch gekennzeichnet, dass** der Nocken (32) an einem elastisch verformbaren Teil einer Wandung (33) des verschwenkbaren Trichters (14) angeformt ist.

## Claims

1. Brewing facility for a coffee machine, comprising a brewing cylinder (6) with a cylindrical bore hole and an upper piston (3) and a lower piston (4) by means of which the brewing cylinder (6) can be sealed to form a brewing chamber (12), whereby the brewing cylinder (6) and the pistons (3, 4) are held in a frame (2) such that they can be shifted with respect to each other, and can be driven by means of a driving facility (9, 10), which driving facility (9, 10) comprises a spindle (9) whose ends on either side are supported in the frame (2) such that they can rotate, and a motor (10), a catching part (7) that is attached on the brewing cylinder (6) and is provided with a threaded part (7a) and, by means of the spindle (9), can be shifted along linear guides that are attached in the frame (2), a coffee powder feed facility for filling coffee powder into the brewing chamber (12), which is provided with a swivel-type funnel (14), which can be moved against a spring force from a filling position into a swivelled-away position and vice versa, and a stripping element (19) for stripping off the coffee powder cake (17), which is ejected from the brewing chamber (12) by the lower piston (4) after the brewing process, into a collecting container (20), **characterised in that** the swivel-type funnel (14) can be swivelled further from the swivelled-away position to a fully swivelled-out position and, in said fully swivelled-out position, can be locked by locking means (29) and unlocked by unlocking means (30).

2. Brewing facility according to claim 1, **characterised in that** the locking means (29) are formed by a cam (32) that is attached on the swivel-type funnel (14) and, with the swivel-type funnel (14) being in the fully swivelled-out position, latches into a recess (34) that is attached on the frame (2) and holds the swivel-type funnel (14) in said fully swivelled-out position.

3. Brewing facility according to claim 2, **characterised in that** the unlocking means (30) are provided by a lever (35) that is held on the frame (2) such that it can swivel and has, on its swivel-type end-region (39), a projection (36) attached to it that projects into the recess (34) and, upon appropriate swivelling, pushes the cam (32) out of the recess (32) and unlocks the swivel-type funnel (14).

4. Brewing facility according to claim 3, **characterised in that** a user element is attached on the lever (35).

5. Brewing facility according to claim 3 or 4, **characterised in that** a peripheral cam (42) is attached to the lever (35) and interacts with a radial cam (41) that is attached on the drivable region of the brewing cylinder (6) and can be used to swivel the lever (35) by means of the peripheral cam (42) while driving up the brewing cylinder (6), and unlocks the fully swivelled-out funnel (14).

6. Brewing facility according to claim 5, **characterised in that** the radial cam (41) is provided in the form of a fin (43) that is provided with a surface (44) that is inclined with respect to the driving direction of the brewing cylinder (6), and which is attached on the stripping element (19).

7. Brewing facility according to any one of the claims 2 to 6, **characterised in that** the cam (32) is formed on an elastically deformable part of a wall (33) of the swivel-type funnel (14).

## Revendications

1. Dispositif-infuseur pour une machine à café, comprenant un cylindre d'infusion (6) avec un perçage cylindrique et un piston supérieur (3) et un piston inférieur (4) par lesquels ledit cylindre d'infusion (6) peut être scellé pour former une chambre d'infusion (12), ledit cylindre d'infusion (6) et lesdits pistons (3, 4) étant maintenus dans un cadre (2) de manière à ce qu'ils puissent être déplaçés les uns par rapport aux autres, et sont susceptibles d'être entraînés par un dispositif d'entraînement (9, 10), ledit dispositif d'entraînement (9, 10) comprenant une broche (9) dont les extrémités de chaque côté sont supportés dans ledit cadre (2) de manière à ce qu'ils puissent tourner, une partie/pièce de prise (7) attachée audit cylindre d'infusion (6) et pourvue d'une partie filetée (7a) et susceptible d'être déplaçée, par ladite broche (9), le long de guides linéaires attachés audit cadre (2), un dispositif d'alimentation en café moulu pour remplir ladite chambre d'infusion (12) de café moulu et pourvu d'une trémie pivotable (14) susceptible d'être déplaçée, à l'encontre d'une force de ressort, à partir d'une position de remplissage vers une position pivotée à l'écart et vice versa, et un élément racleur (19) pour enlever le gâteau de poudre de café (17) qui est éjecté de ladite chambre d'infusion (12) par ledit piston inférieur (4) après le processus d'infusion dans un réservoir collecteur (20), **caractérisé en ce que** ladite trémie pivotable (14) est susceptible d'être pivotée davantage à partir de ladite position pivotée à l'écart vers une position complètement pivotée vers l'extérieur, et, dans cette position complètement pivotée vers l'extérieur, est susceptible d'être verrouillée par des moyens de verrouillage (29) et déverrouillée par des moyens de déverrouillage (30).

2. Dispositif-infuseur selon la revendication 1, **caractérisé en ce que** lesdits moyens de verrouillage (29) sont formés par une came (32) qui est attachée à ladite trémie pivotable (14) et, lorsque ladite trémie pivotable (14) est dans la position complètement pivotée vers l'extérieur, s'enclenche dans un évidement (34) ménagé dans ledit cadre (2) et maintient la trémie pivotable (14) dans la position complètement pivotée vers l'extérieur.

3. Dispositif-infuseur selon la revendication 2, **caractérisé en ce que** lesdits moyens de déverrouillage (30) sont pourvus par un levier (35) qui est maintenu sur ledit cadre (2) de manière à ce qu'il puisse pivoter, et possède, à sa région d'extrémité (39) de type pivotable, une saillie (36) attachée à cette-dernière et faisant saillie dans ledit évidement (34) et, lorsqu'elle est pivotée de manière appropriée, vient pousser ladite came (32) en la faisant sortir dudit évidement (32) et vient déverrouiller ladite trémie pivotable (14).

4. Dispositif-infuseur selon la revendication 3, **caractérisé en ce qu'**un élément utilisateur est attaché audit levier (35).

5. Dispositif-infuseur selon la revendication 3 ou 4, **caractérisé en ce qu'**une came périphérique (42) est attachée audit levier (35) et interagit avec une came radiale (41) qui est attachée à la région déplaçable dudit cylindre d'infusion (6) et peut être utilisée pour faire pivoter ledit levier (35) par ladite came périphérique (42) pendant l'entraînement dudit cylindre d'infusion (6) vers le haut, et vient déverrouiller ladite trémie (14) complètement pivotée vers l'extérieur.

6. Dispositif-infuseur selon la revendication 6, **caractérisé en ce que** ladite came radiale (41) est pourvue sous forme d'une ailette/nervure (43) qui est pourvue d'une surface (44) inclinée par rapport à la direction d'entraînement dudit cylindre d'infusion (6), et qui est attachée audit élément racleur (19).

7. Dispositif-infuseur selon l'une quelconque des revendications 2 à 6, **caractérisé en ce que** ladite came (32) est formée sur une partie élastiquement déformable d'une paroi (33) de ladite trémie pivotable (14).
